# EUROPÄISCHE PATENTSCHRIFT

(11) **EP 1 878 607 B1**
(45) Veröffentlichungstag und Bekanntmachung des Hinweises auf die Patenterteilung: **18.01.2012**
(21) Anmeldenummer: 07012233.8
(22) Anmeldetag: 22.06.2007
(51) Int. Cl.: B60N 2/22, B60N 2/30, B60N 2/36, B60N 2/44, B60R 21/207

(54) **Hintersitzanlage eines Kraftfahrzeuges**
Rear seat of a motor vehicle
Installation de siège arrière d'un véhicule automobile

(30) Priorität: 12.07.2006 DE 102006032133
(43) Veröffentlichungstag der Anmeldung: 16.01.2008
(73) Patentinhaber: Dr. Ing. h.c. F. Porsche AG, 70435 Stuttgart (DE)
(72) Erfinder: Kübler, Markus-Claus, 75328 Schoemberg (DE); Düwel, Klaus-Roger, 71672 Marbach (DE); Padberg, Klaus, 70180 Stuttgart (DE)

(56) Entgegenhaltungen:
- DE-A1- 10 023 779
- FR-A- 2 794 078
- FR-A- 2 830 802
- US-A- 5 870 967
- US-A1- 2006 033 372

## Beschreibung

Die vorliegende Erfindung betrifft eine Hintersitzanlage eines Kraftfahrzeuges mit zumindest einem, eine Lehne und eine Sitzfläche aufweisenden Sitz gemäß dem Oberbegriff des Anspruchs 1.

Vollständig oder teilweise umklappbare Hintersitzanlagen sind bei Kraftfahrzeugen seit längerem bekannt, wobei oftmals die in geringerem Abstand neben bzw. hinter der Hintersitzanlage angeordneten Radkästen Probleme beim Umklappen der Rücksitze bereiten. Darüber hinaus zerklüften die Radkästen oftmals eine Ladefläche, so dass diese selbst bei umgeklappten Rücksitzen nur eingeschränkt nutzbar ist.

Aus der US 4,475,763 ist eine Hintersitzanlage eines Kraftfahrzeugs mit zumindest einem, eine Lehne und eine Sitzfläche aufweisenden Rücksitz bekannt. Dabei weist die Lehne zumindest eine, sich zumindest über einen Teil der Höhe der Lehne erstreckende seitliche Lehnenwange auf, die beim Umklappen bzw. nach vorne klappen der Lehne zur Vergrößerung eines hinter der Hintersitzanlage gelegenen Laderaumes stehen bleibt.

Aus der US 4,708,385 ist ebenfalls eine Hintersitzanlage bekannt, welche zwei getrennt voneinander umlegbare Sitzlehnen aufweisen. Randseitig der beiden Sitzlehnen sind Lehneseitenteile vorgesehen, welche über Verbindungselemente, insbesondere Hinterschnittelemente und Schrauben mit einer Karosserie fest verbunden sind. Diese Lehnenseitenteile bleiben beim Umklappen der beiden Sitzlehnen ortsfest und folgen einer Umklappbewegung der beiden Sitzlehnen nicht.

Schließlich ist aus der US 4,721,338 eine weitere Hintersitzanlage bekannt, welche zwei unabhängig voneinander um eine Schwenkachse nach vorne klappbare Sitzlehnen aufweist. Seitliche Wangenteile der Sitzlehnen bleiben dabei auch bei einer Umklappbewegung der Sitzlehnen ortsfest in ihrer nahezu aufrechten Position.

Aus der US 2006/0033372 A ist eine Sitzanlage für ein Kraftfahrzeug nach dem Oberbegriff des Anspruchs 1 bekannt, die einen eine Sitzfläche aufweisenden Sitz mit einer Lehne umfasst, wobei die Lehne eine seitliche Lehnenwange aufweist, die mit der Lehne und unabhängig von der Lehne um eine Achse verschwenkbar ist. Die Lehnenwange erstreckt sich bis zum oberen Lehnenabschluss. Ein Verschwenken der Lehne und der Lehnenwange erfolgt entgegen der Fahrtrichtung auf eine rückwärtig angeordnete weitere Sitzanlage des Kraftfahrzeugs. Des Weiteren ist aus der DE 100 23 779 A1 ein Rücksitz für ein Kraftfahrzeug mit einer aus einem Mittelteil und einem lösbar mit diesem verbundenen Seitenpolster gebildeten Rückenlehne bekannt. Das Seitenpolster weist eine Airbag-Einrichtung auf und ist in eine abgeschwenkte Gebrauchsposition sowie in eine hochgeschwenkte Ruheposition verschwenkbar. Ferner ist aus der FR 2 294 078 A1 eine Einrichtung zum Einstellen und Verriegeln einer neigbaren Rückenlehne eines Kraftfahrzeugs bekannt, die ein motorisch verstellbares Bügelelement umfasst, welches mit einer Rückenlehne in Eingriff steht.

Die vorliegende Erfindung beschäftigt sich mit dem Problem, für eine Hintersitzanlage der gattungsgemäßen Art eine verbesserte Ausführungsform anzugeben, welche sich insbesondere durch eine verbesserte Funktionalität auszeichnet. Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, bei einer Hintersitzanlage eines Kraftfahrzeugs mit zumindest einem, eine Lehne und eine Sitzfläche aufweisenden Sitz, eine seitliche, sich zumindest über einen Teil der Höhe der Lehne erstreckende Lehnenwange schwenkverstellbar lagern und so auszubilden, dass sie zur Einnahme unterschiedlicher Sitzpositionen gemeinsam mit der Lehne in zumindest zwei unterschiedlichen Lehnenneigungspositionen verstellbar ist. Dabei ist die Lehne aus jeder der eingenommenen Lehnenneigungspositionen unabhängig von der seitlichen Lehnenwange zur Vergrößerung eines hinter der Hintersitzanlage gelegenen Laderaums um eine Schwenkachse nach vorne umklappbar. Dies bietet den besonderen Vorteil, dass die Lehnenwange in der normalen Sitzposition zusammen mit der Lehne in verschiedene Lehnenneigungs-/bzw. Sitzpositionen verstellt werden kann und dadurch stets eine angenehme, insbesondere eine durchgehende, Lehnenfläche geschaffen wird. Gleichzeitig können in der nicht umklappbaren Lehnenwange technische Komponenten angeordnet werden, deren Anordnung in komplett umklappbaren Rücksitzen, d.h. komplett umklappbaren Lehnen und Lehnenwangen, keinen Sinn machen würde. Hierdurch kann die Funktionalität der erfindungsgemäßen Hintersitzanlage gesteigert werden, da nunmehr Baurraum für technische Komponenten zur Verfügung steht, gleichzeitig jedoch die Lehnenwange nicht absolut ortsfest zur Karosserie angeordnet ist und dadurch die Verstellung in verschiedene Lehnenneigungspositionen mitmacht, wodurch ein angenehmes Sitzen ermöglicht wird.

Dabei erstreckt sich die seitliche Lehnenwange nur über einen Teil der Lehnenhöhe, wobei an der Lehne selbst eine, die Lehnenwange übergreifende Schulter angeordnet ist. Hierdurch entsteht eine besondere Aufteilung der Rücksitzlehne in deren Lehnenteil und die seitliche Lehnenwange, wobei das Verhältnis zwischen Schulter und seitlicher Lehnenwange vorzugsweise so gewählt ist, dass bei nach vorn, um die Schwenkachse geklappter Lehne eine nahezu ununterbrochene, d.h. durchgehend ebene Ladefläche entsteht. Darüber hinaus erleichtert eine derartige Schulter das nach vorne Umklappen der Lehne, da eine außen am Fahrzeug stehende Person weniger tief in das Fahrzeug hineingreifen muss, um die Lehne umklappen zu können.

Bei einer vorteilhaften Ausführungsform der erfindungsgemäßen Lösung ist in der Lehnenwange ein Bauraum für eine Telekommunikationseinrichtung und/oder für einen Airbag und/oder für ein Ablagefach vorgesehen. Diese Aufzählung dokumentiert bereits die mannigfaltigen Anordnungsmöglichkeiten für Bauteilkomponenten, wobei insbesondere bei einem Bauraum für einen Airbag wichtig ist, dass die Lehnenwange stets in ihrer im wesentlichen aufrechten Position verbleibt. Durch die im wesentlichen ortsfeste Anordnung der Lehnenwange zur Karosserie ist auch eine elektrische Verbindung zwischen eventuell in der Lehnenwange angeordneten Bauteilkomponenten und einem elektrischen Bordnetz deutlich einfacher. Die geringe, von der Lehnenwange ausführbare Verstellbewegung zum Einnehmen unterschiedlicher Lehnenneigungspositionen, kann dabei von den elektrischen Verbindungsmitteln problemlos mit gemacht werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Frontansicht auf eine erfindungsgemäße Hintersitzanlage mit einer sich in einer Sitzposition befindlichen Lehne,
- Fig. 2: eine Schnittdarstellung durch die Hintersitzanlage im Bereich einer Lehnenwange,
- Fig. 3: eine Darstellung wie in Fig. 2, jedoch bei um die Schwenkachse nach vorn umgeklappter Lehne.

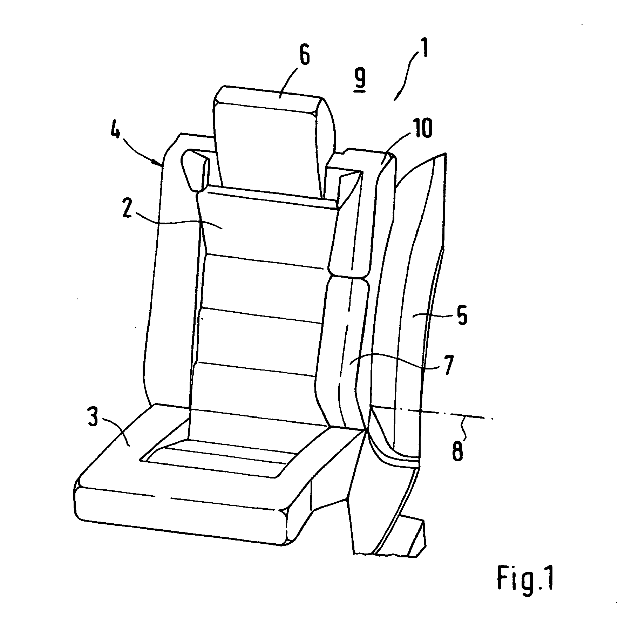

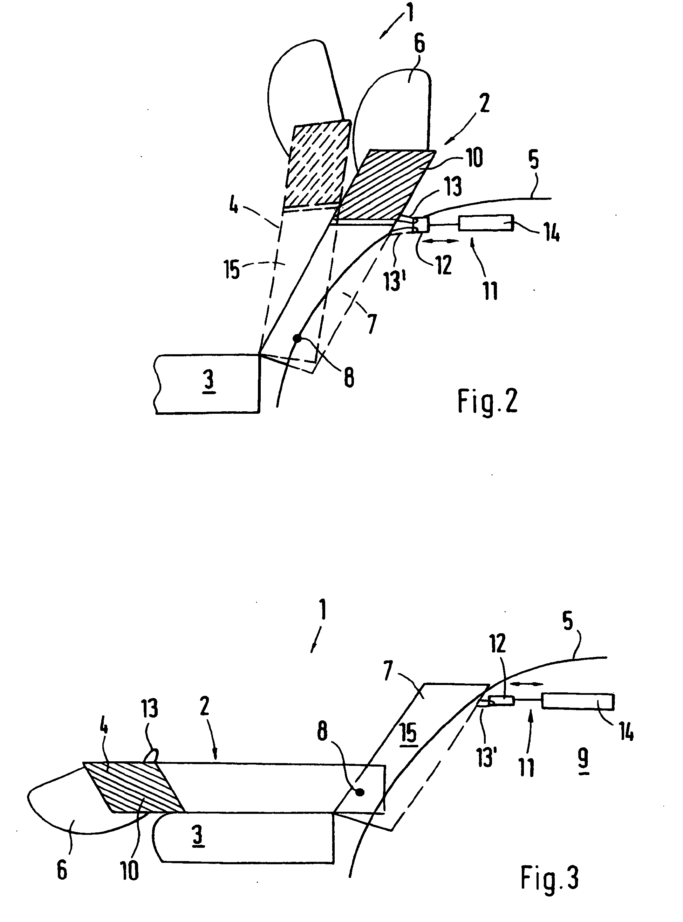

Entsprechend Fig. 1 weist eine erfindungsgemäße Hintersitzanlage 1 einen, zumindest eine Lehne 2 und eine Sitzfläche 3 aufweisenden Rücksitz 4 auf. Dabei ist lediglich ein Rücksitz 4 der üblicherweise zwei Rücksitze umfassenden Hintersitzanlage 1 gezeigt, welcher in unmittelbarer Nachbarschaft zu einem Radkasten 5 angeordnet ist. Sowohl die Lehne 2 als auch die Sitzfläche 3 sind dabei strukturiert ausgebildet und weisen jeweils einen Seitenhalt bietende Wangenabschnitte auf. Darüber hinaus ist kopfendseitig der Lehne 2 eine Kopfstütze 6 angeordnet. Der zum Radkasten 5 benachbart angeordnete Wangenabschnitt der Lehne 2 weist dabei eine seitliche Lehnenwange 7 auf, welche sich lediglich über einen Teil der Höhe der Lehne 2 erstreckt. Generell ist die Lehne 2 unabhängig von der seitlichen Lehnenwange 7 um eine Schwenkachse 8 (vgl. auch Fig. 3) nach vorne umklappbar, um einen hinter der Hintersitzanlage 1 gelegenen Laderaum 9 vergrößern zu können.

Erfindungsgemäß ist nun die Lehnenwange 7 um die Schwenkachse 8 schwenkverstellbar gelagert und so ausgebildet, dass sie gemeinsam der Lehne 2 in zumindest zwei unterschiedliche Lehnenneigungspositionen verstellbar ist. Eine derartige zweite Lehnenneigungsposition ist beispielsweise in der Fig. 2 mit einer unterbrochen gezeichneten Linie dargestellt. Dies bedeutet, dass die Lehnenwange 7 zusammen mit der Lehne 2 in alle üblicherweise vorgesehene, Sitz- bzw. Lehnenpositionen verstellbar ist, so dass ein angenehmes Sitzen erreicht werden kann. Darüber hinaus ist die Lehne 2 jedoch aus jeder Lehnenneigungsposition unabhängig von der seitlichen Lehnenwange 7 um die Schwenkachse 8 nach vorne umklappbar, so dass die Lehnenwange 7 einer Neigung der Lehne 2 lediglich bis zu einem gewissen Grad folgt, bei einem nach vorne Umklappen der Lehne 2 um die Schwenkachse 8 jedoch in ihrer im wesentlichen aufrechten Position verbleibt.

Generell ist dabei die Aufteilung des seitlichen Wangenabschnittes der Lehne 2 in die Lehnenwange 7 und eine diese übergreifende und oberhalb derselben angeordnete Schulter 10 gemäß der Fig. 1 lediglich rein exemplarisch dargestellt, so dass auch eine andere Aufteilung zwischen Lehnenwange 7 und Schulter 10 von der Erfindung umschlossen sein soll. Die Schulter 10 erleichtert einer außerhalb des Kraftfahrzeugs stehenden Person das Umklappen der Lehne 2, da sie einen unmittelbar in Türnähe angeordneten Angriffspunkt bildet.

Entsprechend den Fig. 2 und 3 ist die Lehnenwange 7 direkt über eine Halteeinrichtung 11 an einer Karosserie, beispielsweise dem Radkasten 5, angeordnet bzw. fixiert. Dabei ist denkbar, dass auch die Lehne 2 im Bereich ihrer Schulter 10 direkt über die Halteeinrichtung 11 an der Karosserie fixiert ist oder aber dass lediglich die Lehnenwange 7 direkt über die Halteeinrichtung 11 an der Karosserie fixiert ist, während die Lehne 2, beispielsweise im Bereich ihrer Schulter 10, über eine entsprechend ausgebildete und lösbare Verbindung mit der Lehnenwange 7 verbunden ist, so dass die Lehne 2 indirekt über die seitlichen Lehnenwange 7 lösbar an der Karosserie fixiert ist. Die Halteeinrichtung 11 kann dabei einen karosserieseitigen Schlossbügel 12 und ein damit verbindbares, wangen- bzw. lehnenseitig angeordnetes Schloss 13, 13' aufweisen, wobei auch die Anordnung des Schlossbügels 12 wangen- bzw. lehnenseitig und die Anordnung des Schlosses 13, 13' karosserieseitig vorgesehen sein kann. Insgesamt erlaubt die Halteeinrichtung 11 durch eine vorgesehene Verstelleinrichtung 14 eine im wesentlichen horizontale Verstellung des karosserieseitigen Schlossbügels 12 oder des karosserieseitigen Schlosses 13, wodurch die Lehnenneigungsverstellung vorzugsweise ausschließlich über die Verstelleinrichtung 14 vorgenommen wird. Die Lehnenwange 7 kann über ein separates Schloss 13' mit dem Schlossbügel 12 der Halteeinrichtung 11 verbunden sein und macht dadurch die Lehnenneigungsverstellung mit. Dabei ist das Schloss 13' vorzugsweise nicht lösbar mit dem Schlossbügel 12 verbunden.

Zum Umklappen der Lehne 2 wird entweder die direkt über die Halteeinrichtung 11 mit der Karosserie verbundene Lehne 2 mit dem Schloss 13 vorn Schlossbügel 12 der Halteeinrichtung 11 entkoppelt oder es erfolgt ein Lösen der lösbaren Verbindung zwischen der Lehnenwange 7 und der Lehne 2 bzw. deren Schulter 10.

Unabhängig von der Verstellbarkeit der Lehne 2 kann in der Lehnenwange 7 ein Bauraum 15 beispielsweise für eine Telekommunikationseinrichtung und/oder für einen Airbag und/oder für ein Ablagefach vorgesehen sein, so dass die Lehnenwange 7 eine gesteigerte Funktionalität aufweist. Insbesondere die Anordnung eines Seitenairbags im Bauraum 15 der Lehnenwange 7 bietet den großen Vorteil, dass bei einer nicht umklappfähigen Lehnenwange 7 keine gesonderte Abschaltvorrichtung für den Airbag vorgesehen werden muss, welche diesen bei umgeklappter Lehnenwange 7 deaktiviert. Ebenso ist auch ein Ablagefach bzw. eine in diesem angeordnete Telekommunikationseinrichtung auch bei nach vorne um die Schwenkachse 8 umgeklappter Lehne 2 problemlos zugänglich, da die Lehnenwange 7 in keinem Fall eine Position einnimmt, welche einen Zugang zum im Ablagefach gelegenen Gegenständen bzw. zu einer im Bauraum 15 angeordneten Telekommunikationseinheit verhindert.

Von besonderem Vorteil bei der erfindungsgemäßen Hintersitzanlage 1 ist zudem, dass die Lehne 2 in ihrer Gesamtheit, d.h. einschließlich der Lehnenwange 7 in verschiedene Lehnenneigungspositionen verstellbar ist und die Lehne 2 unabhängig von der Lehnenwange 7 um die Schwenkachse 8 nach vorne umklappbar ist, was bei einer fest mit der Lehne 2 verbundenen Lehnenwange 7 nicht möglich wäre, da je nach Anordnung der Schwenkachse 8 beim Umklappen der Lehne 2 ein nach hinten Schwenken eines unteren Teils der Lehne 2 bzw. der Lehnenwange 7 erfolgt, welche aufgrund konstruktiver Gegebenheiten, hier aufgrund des Radkastens 5, unmöglich ist.

## Patentansprüche

1. Hintersitzanlage (1) eines Kraftfahrzeugs mit zumindest einem, eine Lehne (2) und eine Sitzfläche (3) aufweisenden Sitz (4), wobei die Lehne (2) zumindest eine, sich zumindest über einen Teil der Höhe der Lehne (2) erstreckende, seitliche Lehnenwange (7) aufweist und unabhängig von der seitlichen Lehnenwange (7) zur Vergrößerung eines hinter der Hintersitzanlage (1) gelegenen Laderaumes (9) um eine Schwenkachse (8) nach vorne umklappbar ist, wobei die Lehnenwange (7) um die Schwenkachse (8) schwenkverstellbar gelagert und so ausgebildet ist, dass sie gemeinsam mit der Lehne (2) in zumindest zwei unterschiedliche Lehnenneigungspositionen verstellbar ist, **dadurch gekennzeichnet, dass** sich die seitliche Lehnenwange (7) nur über einen Teil der Lehnenhöhe erstreckt und dass an der Lehne (2) feststehend eine die Lehnenwange (7) übergreifende Schulter (10) angeordnet ist und dass die Lehne (2) mit der Schulter (10) aus jeder Lehnenneigungsposition unabhängig von der seitlichen Lehnenwange (7) um die Schwenkachse (8) nach vorne in Fahrtrichtung auf die Sitzfläche (3) umklappbar ist.

2. Hintersitzanlage nach Anspruch 1, **dadurch gekennzeichnet, dass** die Lehnenwange (7) direkt über eine Halteeinrichtung (11) an einer Karosserie fixierbar ist und dass die Lehne (2) indirekt über die seitliche Lehnenwange (7) lösbar an der Karosserie fixierbar ist, wobei die Halteeinrichtung (11) einen karosserieseitigen Schlossbügel (12) und ein damit verbindbares, wangen seitiges Schloss (13) aufweist oder umgekehrt.

3. Hintersitzanlage nach Anspruch 2, **dadurch gekennzeichnet, dass** der karosserieseitige Schlossbügel (12) oder das karosserieseitige Schloss (13) im Wesentlichen horizontal zur Lehnenneigungsstellung verstellbar an der Karosserie gelagert ist.

4. Hintersitzanlage nach den Ansprüchen 2 oder 3, **dadurch gekennzeichnet, dass** eine Verstelleinrichtung (14) vorgesehen ist, welche zur Lehnenneigungsverstellung den karosserieseitigen Schlossbügel (12) oder das karosserieseitige Schloss (13) im Wesentlichen horizontal verstellt.

## Claims

1. Rear seat system (1) of a motor vehicle, with at least one seat (4) which has a backrest (2) and a seat surface (3), wherein the backrest (2) has at least one lateral backrest cheek (7) extending at least over part of the height of the backrest (2) and can be folded over forward about a pivot axis (8) independently of the lateral backrest cheek (7) in order to enlarge a loading space (9) situated behind the rear seat system (1),
wherein the backrest cheek (7) is mounted such that it can be adjusted by pivoting about the pivot axis (8) and is designed in such a manner that it can be adjusted together with the backrest (2) into at least two different backrest inclination positions, **characterized in that** the lateral backrest cheek (7) extends only over part of the height of the backrest, and **in that** a shoulder (10) which engages over the backrest cheek (7) is arranged fixed on the backrest (2), and **in that** the backrest (2) together with the shoulder (10) can be folded over forward in the direction of travel about the pivot axis (8) onto the seat surface (3) from each backrest inclination position independently of the lateral backrest cheek (7).

2. Rear seat system according to Claim 1, **characterized in that** the backrest cheek (7) can be fixed on a vehicle body directly via a retaining device (11), and **in that** the backrest (2) can be fixed releasably on the vehicle body indirectly via the lateral backrest cheek (7), the retaining device (11) having a locking bar (12) on the vehicle body and a lock (13) on the cheek that can be connected thereto, or vice versa.

3. Rear seat system according to Claim 2, **characterized in that** the locking bar (12) on the vehicle body or the lock (13) on the vehicle body is mounted on the vehicle body in a manner such that it can be adjusted essentially horizontally with respect to the adjustment of the backrest inclination.

4. Rear seat system according to Claim 2 or 3, **characterized in that** an adjusting device (14) is provided which adjusts the locking bar (12) on the vehicle body or the lock (13) on the vehicle body essentially horizontally with respect to the adjustment of the backrest inclination.

## Revendications

1. Installation de siège arrière (1) d'un véhicule automobile comprenant au moins un siège (4) présentant un dossier (2) et une surface d'assise (3), le dossier (2) présentant au moins une paroi de dossier latérale (7) qui s'étend au moins sur une partie de la hauteur du dossier (2) et pouvant être rabattu vers l'avant autour d'un axe de pivotement (8), indépendamment de la paroi de dossier latérale (7), pour augmenter un espace de chargement (9) situé derrière l'installation de siège arrière (1), la paroi de dossier (7) étant montée de manière réglable par pivotement autour de l'axe de pivotement (8) et étant réalisée de telle sorte qu'elle puisse être réglée conjointement avec le dossier (2) dans au moins deux positions d'inclinaison de dossier différentes, **caractérisée en ce que** la paroi de dossier latérale (7) ne s'étend que sur une partie de la hauteur du dossier et **en ce qu'**un épaulement (10) venant en prise par-dessus la paroi de dossier (7) est disposé fixement sur le dossier (2) et **en ce que** le dossier (2) avec l'épaulement (10) peut être rabattu depuis chaque position d'inclinaison du dossier indépendamment de la paroi de dossier latérale (7) autour de l'axe de pivotement (8) vers l'avant dans la direction de conduite sur la surface d'assise (3).

2. Installation de siège arrière selon la revendication 1, **caractérisée en ce que** la paroi de dossier (7) peut être fixée directement par le biais d'un dispositif de retenue (11) à une carrosserie et **en ce que** le dossier (2) peut être fixé indirectement par le biais de la paroi de dossier latérale (7) de manière détachable à la carrosserie, le dispositif de retenue (11) présentant une targette en forme d'étrier (12) du côté de la carrosserie, et une attache (13) pouvant lui être connectée, du côté de la paroi, ou inversement.

3. Installation de siège arrière selon la revendication 2, **caractérisée en ce que** la targette en forme d'étrier (12) du côté de la carrosserie ou l'attache (13) du côté de la carrosserie est montée sur la carrosserie de manière réglable essentiellement horizontalement par rapport à la position d'inclinaison du dossier.

4. Installation de siège arrière selon les revendications 2 ou 3, **caractérisée en ce qu'**il est prévu un dispositif de réglage (14) qui règle essentiellement horizontalement la targette en forme d'étrier (12) du côté de la carrosserie ou l'attache (13) du côté de la carrosserie pour le réglage de l'inclinaison du dossier.
